# EUROPÄISCHE PATENTANMELDUNG

(11) **EP 1 626 560 A1**
(43) Veröffentlichungstag der Anmeldung: **15.02.2006**
(21) Anmeldenummer: 05012487.4
(22) Anmeldetag: 10.06.2005
(51) Int. Cl.: H04M 3/51, H04Q 7/22

(54) **Telematik-Notrufe durch Senden einer SMS-Nachricht und Aufbau einer Telefonverbindung**

(30) Priorität: 11.08.2004 DE 102004039636
(71) Anmelder: Deutsche Telekom AG, 53113 Bonn (DE)
(72) Erfinder: Beyer, Rolf, Dipl.-Ing., 53639 Königswinter (DE); Ebersberger, Georg, Dipl.-Inf., 40589 Düsseldorf (DE)

(57) **Zusammenfassung**

Ein Verfahren und eine Vorrichtung zur Abwicklung internationaler Telematik-Notrufe wird vorgeschlagen, wobei mindestens eine in einem Callcentersystem (2a,2) eingehende Telefonverbindung mit einem in einem Dienstesystem gespeicherten Datenpaket synchronisiert wird, wobei es sich bei dem Datenpaket um eine durch eine SMS übermittelte MSISDN handelt und wobei zur Synchronisierung eine CLI der im Callcentersystem eingehenden Telefonverbindung erfasst wird, und aus dem im Dienstesystem gespeicherten Datenpaket eine MSISDN erfasst wird, und die CLI der im Callcentersystem eingehenden Sprachverbindung in eine Synchronisierungskennung im MSISDN-Format überführt wird unter Prüfung, ob der Anfang der erfassten CLI mit einem oder mehreren im Callcentersystem gespeicherten Präfixen übereinstimmt, und zutreffendenfalls Löschung oder Ersetzung dieses Anfangs der CLI unter Bildung der Synchronisierungskennung, und ferner diese Synchronisierungskennung mit der MSISDN verglichen wird. Dadurch wird erreicht, daß bei einem Notruf eingehende Mobiltelefongespräche und SMS-Nachrichten einander zugeordnet werden können.

## Beschreibung

Die Erfindung betrifft ein Verfahren und eine Vorrichtung zur Abwicklung von Telematik-Notrufen nach dem Oberbegriff der Ansprüche 1 und 6.

Nach dem Stand der Technik sind Telematik-Endgeräte bekannt, die bei Auftreten eines Notfalls per Mobilfunk eine Daten-Nachricht an eine Notrufzentrale absetzen, wie durch die Offenlegungsschrift DE 19650176 vorgeschlagen. Die Daten-Nachricht, bspw. SMS, kann dabei die durch ein Ortungssystem, bspw. GPS, ermittelten Ortsinformationen sowie weitere Informationen enthalten.

Zugleich kann eine Mobiltelefonverbindung zu einem Notruf-Callcenter aufgebaut werden. Dabei ist zur Verwaltung von Anruf-Vorgängen in einem Callcenter ein System wie in Offenlegungsschrift DE 10059188 offenbart bekannt.

Zur effizienten Auswertung der gewonnenen Notfalldaten und der Mobiltelefonverbindung ist die automatisierte Zusammenführung der Daten-Nachricht mit der entsprechenden Mobiltelefonverbindung wünschenswert. Hierfür ist ein von der Erfinderin selbst entwickeltes System bekannt, welches die Abwicklung solcher Telematik-Notrufe unterstützt. Dabei wird die als SMS-Nachricht übermittelte Daten-Nachricht anhand der darin enthaltenen MSISDN (Mobile Subscriber Identity) des Mobilfunkteilnehmers identifiziert und die Mobiltelefonverbindung anhand ihrer CLI (Calling Line Identification). Die CLI ist dabei abhängig von, aber nicht identisch mit der dem Telematik-Endgerät national zugewiesenen MSISDN.

Hierbei entstehen jedoch Probleme bei der nationenübergreifenden Verwendung eines solchen Systems, etwa wenn für jedes Land dezentral ein nationales Callcenter eingerichtet werden soll, welchem die im jeweiligen Land entstehenden Notfall-Mobiltelefonverbindungen unmittelbar zugeleitet werden, die Verarbeitung der Notfall-Datennachrichten jedoch zentral für die Gesamtheit aller Länder erfolgen soll. Durch den unterschiedlichen Aufbau der CLIs je nach Anrufer- und Länderkonstellation wird die Zusammenführung von Mobiltelefonverbindung und Daten-Nachricht erheblich erschwert.

Demnach ist es Aufgabe der Erfindung, ein Verfahren und eine Vorrichtung zur Abwicklung von aus einer Daten-Nachricht und einer Mobiltelefonverbindung bestehenden Telematik-Notrufen anzugeben, die nationenübergreifend eingesetzt werden können und die die genannten Nachteile des Standes der Technik vermeiden.

Diese Aufgabe wird erfindungsgemäß durch den Gegenstand der Ansprüche 1 und 6 gelöst.

Die Lösung nach Anspruch 1 weist dabei die folgenden Vorteilhaftigkeiten auf:

Indem die CLI der im Callcentersystem eingehenden Sprachverbindung in eine Synchronisierungskennung im MSISDN-Format überführt wird, werden im Callcentersystem zur Synchronisationsvorbereitung Kennungen im unmittelbaren Rufnummernformat verwendet. Hierdurch kann die Umwandlung im Rahmen von ACD-(Automatic Call Distribution-) Funktionen implementiert werden, welche üblicherweise von in Callcentersystemen eingesetzten Telekommunikationsanlagen bereitgestellt werden. Hierdurch wird technischer Zusatzaufwand verringert.

Dadurch, dass geprüft wird, ob der Anfang der erfassten CLI mit einem im Callcentersystem gespeicherten International Prefix (International Prefix" heißt in der Gesamtheit dieser Anmeldung: das Präfix des Landes des angerufenen Callcenters für einen nicht aus demselben Land ankommenden Anruf, wobei das Präfix nicht die konkrete Länderkennung mitumfasst) übereinstimmt, und zutreffendenfalls dieser Anfang der CLI unter Bildung der Synchronisierungskennung gelöscht wird, wird es ermöglicht, die CLI eines Notruf-Telematikendgerätes, welchem in einem anderen Land als dem des angerufenen Callcenters eine Rufnummer zugeteilt wurde, um das International Prefix zu bereinigen und auf diese Weise die MSISDN im internationalen Format zu erhalten. Somit können Mobiltelefonverbindungen von Teilnehmern eines anderen Landes als das des Callcenters durch dieses Callcenter verarbeitet und mit in der im zentralen Dienstesystem verarbeiteten Notruf-Datennachricht zusammengeführt, d.h. synchronisiert, werden.

Dadurch, das ferner geprüft wird, ob der Anfang der erfassten CLI mit einem im Callcentersystem gespeicherten National Prefix (National Prefix" heißt in der Gesamtheit dieser Anmeldung: das Präfix des Landes des angerufenen Callcenters für Anrufe aus demselben Land) übereinstimmt, und zutreffendenfalls dieser Anfang der CLI unter Bildung der Synchronisierungskennung gegen einen im Callcentersystem gespeicherten Mobil Country Code (Mobile Country Code" heißt in der Gesamtheit dieser Anmeldung: die internationale Länderkennung des jeweiligen Landes, in dem sich ein Callcenter befindet) ersetzt wird, wird erreicht, dass ein aus dem Inland eingehender Anruf als solcher identifiziert und dessen CLI um das National Prefix bereinigt mit der inländischen Länderkennung (dem Mobil Country Code) versehen wird, sodass die entsprechende Nummer im MSISDN-Format entsteht.

Dadurch, dass die Synchronisierungskennung mit der MSISDN verglichen wird, wird auf technisch aufwandsarme und mit Funktionalitäten einer TK-Anlage technisch aufwandssparend zu implementierende Weise die Zusammenführung zwischen Notruf-Daten-Nachricht und Mobiltelefonverbindung bewerkstelligt.

Die vorteilhaften Merkmale der erfindungsgemäßen Lösung nach Anspruch 6 werden im Folgenden kurz dargestellt:

Dadurch, dass das vorrichtungsgemäße Callcentersystem einen Parameterspeicher aufweist, in dem als Parameter ein International Prefix und ein National Prefix enthalten ist, sind länderspezifisch konstante Zeichenketten im System hinterlegt, auf die für die Umformung einer CLI in eine MSISDN und/oder die Generierung einer zur Anwahl durch das Callcentersystem bestimmten Rufnummer aus einer MSISDN in einfacher Weise zugegriffen werden kann. Auf diese Weise sind alle länderspezifischen Präfix-Parameter eines Landes dezentral im Callcentersystem des jeweiligen Landes abgelegt. Somit wird ansonsten entstehender Pflegeaufwand einer Datenzentrale vermieden.

Dadurch, dass das Callcentersystem programmtechnisch eingerichtet ist zur automatischen Vergleichung der im Parameterspeicher enthaltenen Parameterwerte mit einer Zahlenfolge und zur Entfernung oder Hinzufügung von Parameterwerten aus bzw. zur Zahlenfolge aufweist, wird die Durchführung eines Umformungsverfahrens zwischen CLI und MSISDN, wie nach dem erfindungsgemäßen Verfahren, ermöglicht.

Vorteilhafte Weiterbildungen der Erfindungen nach den Ansprüchen 1 bzw. 6 sind gemäß der jeweils darauf rückbezogenen Unteransprüche möglich und werden im Folgenden kurz erläutert:

Eine vorteilhafte Weiterbildung des erfindungsgemäßen Verfahrens sieht vor, dass geprüft wird, ob die CLI leer ist, und zutreffendenfalls eine Synchronisierungskennung im MSISDN-Format synthetisch erzeugt wird. Hierdurch wird im Falle einer eingehenden Notruf-Mobiltelefonverbindung, bei der die Übertragung einer CLI fehlschlägt oder diese deaktiviert wurde, ermöglicht, eine Ersatz-MSISDN zu generieren und diese in der Vorrichtung zur Abwicklung von Telematik-Notrufen weiterzuverarbeiten. Hierdurch können solche Mobiltelefonverbindungen ohne CLI in gleicher Weise wie solche mit CLI anhand ihrer MSISDN verwaltet werden, wodurch technische Zusatzimplementierungen vermieden werden.

Außerdem kann das Verfahren dahingehend weitergebildet werden, dass zum im Dienstesystem gespeicherten Datenpaket eine vom Callcentersystem ausgehende Telefonverbindung aufgebaut wird unter Ausführung der Schritte: a. Erfassen der im Datenpaket enthaltenen MSISDN; b. Prüfen, ob der Anfang der MSISDN mit einem im Callcentersystem gespeicherten Mobile Country Code übereinstimmt, und im zutreffenden Falle Ersetzen dieses Anfangs durch eine im Callcenter gespeicherte Mcc Compensation ("Mcc Compensation" heißt in der Gesamtheit dieser Anmeldung: der für die Anwahl von nationalen Ferngesprächen notwendige Präfix nach Wegfall der Länderkennung des internationalen Rufnummernformats) unter Bildung eines Rufnummernstrings; c. Voranstellen eines im Callcentersystem gespeicherten SoPrefix "(SoPrefix" heißt in der Gesamtheit dieser Anmeldung: die von der Telekommunikationsanlage des Callcentersystems vorausgesetze Vorwahl für die Amtsleitung) an den Rufnummernstring. Hierdurch wird es ermöglicht, einen Teilnehmer am Mobilfunk-Notfallsystem zurückzurufen, etwa wenn zu einem vorhandenen Notruf-Datenpaket keine entsprechende Notruf-Telefonverbindung eingegangen ist oder wenn die Telefonverbindung unterbrochen wurde. Dies wird durch die Ausführung der vorgenannten Schritte a., b. und c. ermöglicht, durch die die im Notruf-Datenpaket enthaltene MSISDN in eine Rufnummer umgewandelt wird, die durch die Telekommunikationsanlage des Callcentersystems im lokalen Telefonnetz angewählt werden kann. Hierbei wird ggf. die in der MSISDN enthaltene Länderkennung des Landes des jeweiligen, den Anruf tätigenden Callcenters ("Mobile Country Code") ersetzt durch den für die Anwahl von nationalen Ferngesprächen notwendigen Präfix nach Wegfall der Länderkennung des internationalen Rufnummernformats ("Mcc Compensation") und ferner wird dieser Rufnummernstring ergänzt durch die von der Telekommunikationsanlage des Callcentersystems vorausgesetze Vorwahl für die Amtsleitung ("So Prefix"). Dieses SoPrefix kann auch leer sein, wenn das Telefonnetz ohne weitere Vorwahl erreicht wird.

Eine weitere vorteilhafte Weiterbildung des Verfahrens sieht vor dass, falls bei der obengenannten Prüfung der Anfang der MSISDN mit dem Mobile Country Code nicht übereinstimmt, ein im Callcentersystem gespeicherter Foreign Call Prefix ("Foreign Call Prefix" heißt in der Gesamtheit dieser Anmeldung: die Vorwahl eines nationalen Telefonnetzes für ausgehende internationale Anrufe) der MSISDN vorangestellt wird unter Bildung eines Rufnummernstrings. Auf diese Weise wird es ermöglicht, vom Callcenter aus eine ausländische Nummer anzuwählen, etwa eines ausländischen Teilnehmers am Notrufsystem, dessen Notruf-Telematikendgerät in einem anderen Land als dem des angerufenen Callcenters eine Rufnummer zugeteilt wurde.

Nach einer anderen vorteilhaften Weitbildung des Verfahrens wird geprüft, ob die MSISDN einer im Callcentersystem gespeicherten Short Number ("Short Number" heißt in der Gesamtheit dieser Anmeldung: die Kurzwahl eines nationalen Telefonnetzes für Notrufnummern der nationalen Rettungsdienste) entspricht und zutreffendenfalls die MSISDN als Rufnummernstring übernommen. Auf diese Weise können Notrufnummern der Rettungsdienste oder Polizei, wie 911 oder 110/112, unmittelbar angewählt werden.

Die Fortbildungen der erfindungsgemäßen Vorrichtung sind den auf Anspruch 6 rückbezogenen Ansprüchen zu entnehmen und weisen den vorstehend erläuterten Verfahrensfortbildungen entsprechende vorteilhafte Einrichtungen auf.

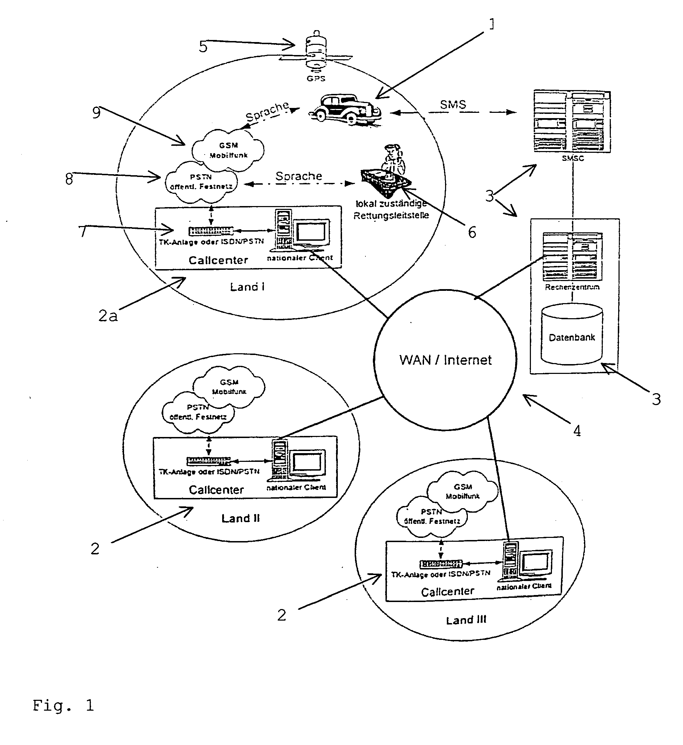

Die Erfindung wird anhand einer Figur und mehrerer Ausführungsbeispiele erläutert. Es zeigt die
- Fig.1: einen systematischen Überblick über Komponenten der Vorrichtung im Zusammenwirken mit Telematik-Endgeräten und weiteren Hilfskomponenten.

Die Figur zeigt einen systematischen Überblick über die Abwicklung von Telematik-Notrufen und -Pannenmeldungen mithilfe eines Ausführungsbeispiels der vorliegenden Erfindung. Spezielle Telematik-Endgeräte 1, welche bspw. in Kraftfahrzeugen angeordnet sind, senden bei Bedarf eine Daten-Nachricht (bspw. eine SMS-Nachricht) per Mobilfunk an eine Dienstezentrale 3, die als Notrufzentrale diese eingegangenen Datennachrichten (ECM, Emergency Call Message) als Datenpakete verarbeitet. Diese Telematik-Endgeräte 1 sind im vorliegenden Beispiel mit Ortungssystemen für GPS 5 ausgestattet, sodass die ermittelten Koordinaten des Auslöseortes in der Datennachricht mitversendet werden. Zusätzlich wird eine Mobiltelefonverbindung 9 (hier: Sprachverbindung, möglich aber auch Telefax etc.) vom im Fahrzeug befindlichen Telematik-Endgerät 1 zu einem Notruf-Callcenter 2a, 2b, 2c aufgebaut, typischerweise unter Benutzung des örtlichen Festnetzes 8.

Im vorliegenden Beispiel ist dabei in einer Mehrzahl verschiedener Länder je ein gleichartiges nationales Notruf-Callcenter 2a, 2b, 2c eingerichtet, wobei die Sprachverbindung stets zu dem Callcenter desjenigen Landes aufgebaut wird, in dem der Notruf ausgelöst wird.

Ferner ist eine Dienstezentrale 3 (d.h., Notrufzentrale) eingerichtet, die für alle Callcenter 2a, 2b, 2c länderübergreifend und zentral die Datennachrichten (ECM) durch ein darin betriebenes Dienstesystem (3) entgegennimmt, aufbereitet und mittels einer Datenbank (31) verwaltet. Als Kennung für einen Vorgang, also einen Eingang eine Notrufnachricht, dient die MSISDN (Mobile Subscriber Identity) des Mobilfunkteilnehmers, (d.h. des Inhabers des TelematikEndgerätes), also seine "Rufnummer" im internationalen Format, bspw. "491711234567". Dabei bezeichnet "49" den Ländercode für Deutschland und "1711234567" eine Rufnummer, hier mit Vorwahl eines deutschen Mobilfunknetzes.

Die nationalen Callcenter 2a, 2b, 2c sind jeweils mit der Dienstezentrale 3 über eine Datenleitung 4 verbunden, bspw. ein WAN (Wide Area Network) oder das Internet.

Die nationalen Callcenter 2a, 2b, 2c jeweils umfassen neben den für Callcenter üblichen informationstechnischen Einrichtungen Telekommunikationsanlagen 7, welche typischerweise mit dem örtlichen Fernsprechnetz 8 verbunden sind. Zur Synchronisation, d.h. zur Zusammenführung, von in den jeweiligen nationalen Callcentern 2a, 2b, 2c eingegangenen Sprachverbindungen mit den zentral verarbeiteten ECM wird die Rufnummerninformation der eingehenden Sprachverbindung (CLI, Calling Line Identification) im jeweiligen Callcentersystem 2a, 2b, 2c erfasst und in das internationale Format der MSISDN umgeformt.

Das vorliegende Beispiel trägt dem Umstand Rechnung, dass die Telekommunikationsanlagen 7 und die jeweiligen nationalen Fernsprechnetze 8 unterschiedliche Präfixe für eingehende und ausgehende Anrufe verwenden. Es stellt sich bspw. die CLI eines in einem nationalen Callcenter 2a, 2b, 2c eingehenden Anrufs für eingehende nationale und internationale Verbindungen unterschiedlich dar: Etwa wird die CLI einer Sprachverbindung eines deutschen Mobilfunkteilnehmers (Teilnehmer hat die MSISDN "491711234567") im deutschen Callcenter als "01711234567" oder, je nach Telekommunikationsanlage, als "001711234567" dargestellt, während die CLI einer Sprachverbindung eines österreichischen Mobilfunkteilnehmers (Teilnehmer hat die MSISDN "436761234567") im deutschen Callcenter als "00436761234567" oder, je nach Telekommunikationsanlage, als "000436761234567" dargestellt wird.

Hinsichtlich ausgehender Anrufe (z.B. vom Callcenter an das Telematik-Endgerät 1) wird die Umformung einer als MSISDN bekannten "Rufnummer" unter Berücksichtigung der national unterschiedlichen Präfixe durchgeführt, wenn, wie im vorliegenden Beispiel, eine eingehende Sprachverbindung unterbrochen wurde und das Callcentersystem 2a, 2b, 2c einen Rückruf vornehmen will. Typischerweise ist es nämlich nicht möglich, über ein Festnetz 8, an welches vorliegend die Telekommunikationsanlage 7 des Callcentersystems angeschlossen ist, eine nationale Rufnummer im internationalen Format anzuwählen, also z.B. von einem Festnetztelefon in Deutschland den Teilnehmer 1 mit der Rufnummer "0123/4567" durch das Anwählen von "0049123/4567" zu erreichen.

Auch werden nationale Sonderfälle der Zusammensetzung internationaler Rufnummern durch das vorliegende Ausführungsbeispiel berücksichtigt. Für Italien etwa muss bei internationaler Anwahl auch die führende "0" einer Rufnummer mitgewählt werden, bspw. "003901234567".

Die Rufnummern für die in den unterschiedlichen Ländern national zuständigen Polizei- und Rettungsdienstleitstellen 6 bzw. für Pannenhilfsunternehmen 6 werden im vorliegenden Beispiel zentral durch das Dienstesystem 3 der Dienstezentrale verwaltet und in dessen Datenbank 31 im internationalen MSISDN-Format abgelegt. Da es z.B. bei Auslösungen von Telematik-Endgeräten 1 im grenznahen Bereich zwischen zwei Ländern des Systems zu "Irrläufern" kommen kann, bei denen die Sprachverbindung zum Callcenter 2a des ersten Landes aufgebaut wird, sich der Notrufende aber im zweiten Land 2b aufhält, ermöglicht das vorliegende Ausführungsbeispiel, auch die national zuständige Polizei- und Rettungsdienstleitstelle, bzw. Pannenhilfsunternehmen, eines Nachbarlandes zu erreichen.

Dabei erfolgt nach dem vorliegenden Ausführungsbeispiel sowohl die Interpretation der CLI der im Callcenter 2a, 2b, 2c eingehenden Sprachverbindung als auch die lokale Aufbereitung der durch das Callcenter anzuwählenden Teilnehmerrufnummern vollautomatisch und durch ACD-Funktionalitäten (Automatic Call Distribution) der Telekommunikationsanlage 7 und des Informationsverarbeitungssystems (IV-Systems) der Dienstezentrale 3.

Um die vorbeschriebene Funktionalität zu gewährleisten, werden in der Datenbank 31 die MSISDNs der aktuellen Vorgänge (Notruffall mit Daten und Sprachruf) im internationalen Format abgelegt und alle Vorgänge unabhängig vom Aufenthaltsland des Teilnehmers zentral in einer Datenbank 31 gehalten. Ferner werden die Ruf- und Faxnummern der zu informierenden Institutionen 6 (typischerweise Polizei und Rettungsdienste) im internationalen MSISDN-Format zentral abrufbar abgelegt. Wie eingangs beschrieben, können auf diese Daten alle nationalen Callcenter 2a, 2b, 2c ("Callcentersatelliten") über eine Datenleitung (WAN, Internet) 4 zugreifen.

In der vollen Ausbaustufe wird zudem in jedem der nationalen Callcentersysteme 2a, 2b, 2c länderspezifisch gespeichert:
a) welchen Präfix die lokale Telekommunikationsanlage oder der lokale Telefonnetzzugang für die CLI eingehender nationaler Anrufe vergibt ("National Prefix");
b) welchen Präfix die lokale Telekommunikationsanlage oder der lokale Telefonnetzzugang für die CLI eingehender internationaler Anrufe vergibt ("International Prefix");
c) welchen Präfix die lokale Telekommunikationsanlage oder der lokale Telefonnetzzugang für ausgehende internationale Anrufe erwartet ("Foreign Call Prefix");
d) welchen Präfix die lokale Telekommunikationsanlage oder der lokale Telefonnetzzugang für die Anwahl von Telefonnummern auf der Amtsleitung erwartet ("SoPrefix", "Amt holen");
e) der internationale Ländercode des Landes, in dem sich das jeweilige Callcenter befindet ("Mobile Country Code", z.B. "49" für Deutschland in einem deutschen Callcenter);
f) durch welche Ziffern dieser Ländercode ersetzt werden muss bei Anwahl der Rufnummer aus dem jeweiligen Inland ("MccCompensation");
g) Kurzwahlen für Polizei, Rettungsdienst und/oder Pannenhilfe ("Short Number").

Zusätzlich zu den zum Speichern der Präfixe eingerichteten Speichermitteln ist jedes Callcentersystem 2a, 2b, 2c programmtechnisch derart eingerichtet, dass unter Rückgriff, vorzugsweise ausschließlich, auf die ACD-Funktionalitäten (Automatic Call Distribution) der Telekommunikationsanlage der folgende Rufnummern-Aufbereitungsprozess durchgeführt wird:

Für die Synchronisation eines eingehenden Anrufs:
- Hat eingehender Anruf eine CLI?
   o Ja: Ist der International Prefix vorangestellt?
      ■ Ja: Präfix von CLI abschneiden und String zur Synchronisation verwenden
      ■ Nein: Ist der National Prefix vorangestellt?
         - Ja: Präfix von CLI abschneiden, durch Mobile Country Code ersetzen und String zur Synchronisation verwenden
         - Nein: CLI unverändert belassen
   o Nein: Generieren einer "Ersatz-MSISDN" und eines neuen Datenbank-Eintrages. Eine Synchronisation zwischen Anruf und Datensatz aus ECM ist dann nicht möglich.

Für das Generieren eines ausgehenden Anrufs aufgrund einer Nummer im internationalen Format bzw. MSISDN aus der Datenbank:
- Entspricht die Nummer einer lokalen Short Number?
   o Ja: So Prefix (kann auch leer sein, "NULL") voransetzen und den resultierenden String an das Telekommunikationssystem übergeben
- Beginnt die Rufnummer mit dem Mobile Country Code?
   o Ja: den Mobile Country Code von der Rufnummer abschneiden und durch den Präfix Mcc Compensation (kann auch leer sein, "NULL") ersetzen. Dann So Prefix voransetzen und den resultierenden String an das Telekommunikationssystem übergeben
   o Nein: den Foreign Call Prefix voransetzen sowie So Prefix voransetzen und resultierenden String an das Telekommunikationssystem übergeben

Die Reihenfolge der Prüfungsschritte kann dabei in jedem Fachmann geläufiger Weise programmtechnisch variiert werden.

Das vorliegende Ausführungsbeispiel beschreibt die volle Ausbaustufe des Systems. Implementierungen mit nur Teilen der vorstehend beschriebenen gespeicherten Präfixe und/oder programmierten Ersetzungsverfahrensmerkmale sind möglich, insbesondere gruppiert nach Funktionen und Präfixen für die Entgegennahme/Synchronisation und Funktionen und Präfixen für den Rufaufbau/Rufnummerngenerierung.

Die konkrete Funktionsweise wird nun anhand von vier Verwendungsszenarien in schrittweiser Abfolge veranschaulicht. Dabei sind in den fünf Ländern I bis V Präfixe wie folgt gespeichert:

| **Call center** | **National Prefix** | **International Prefix** | **Mobile Country Code** | **Mcc Compensation** | **Foreign Call Prefix** | **So Prefix** | **Short Numbe**r |
|---|---|---|---|---|---|---|---|
| **I** | 0 | 00 | 49 | 0 | 00 | | 110 |
| **II** | 0 | 00 | 33 | 0 | 00 | | 18 |
| **III** | 0 | 00 | 34 | | 00 | | 112 |
| **IV** | 0 | 00 | 39 | | 00 | | 112 |
| **V** | 11 | 22 | 99 | 66 | 77 | 88 | 4444 |

### Szenario 1:

- Ein Teilnehmer befindet sich im Land II und setzt eine ECM als SMS mit der MSISDN "491711234567" ab
- Die ECM wird vom Dienstesystem der Datenzentrale entgegengenommen
- Ein Datensatz mit der MSISDN "491711234567" wird in der Datenbank des Dienstesystems angelegt
- Das Callcenter des Landes II erhält einen Anruf vom Teilnehmer, die CLI wird als String "00491711234567" von der lokalen Telekommunikationsanlage bzw. von dem lokalen Telefonnetzzugang übergeben
- Der führende Präfix "00" wird als International Prefix erkannt und zum Abgleich mit dem Datenbankeintrag abgeschnitten, sodass die Synchronisierungskennung "491711234567" entsteht. Auf diese Weise kann die MSISDN aus der ECM in der Datenbank mit der CLI des Anrufes "gematched" werden
- Zum Aufbau eines Rückfrageanrufes zu einer Institution des selben Landes, für die in der Datenbank die Rufnummer "33987654321" hinterlegt ist, wird diese geprüft: Der Mobile Country Code "33" wird erkannt und durch Mcc Compensation "0" ersetzt. Es wird also der String "0987654321" an die lokale Telekommunikationsanlage bzw. den lokalen Telefonnetzzugang übergeben (So Prefix ist nicht gefüllt)

### Szenario 2:

- Ein Teilnehmer befindet sich im Land III und setzt eine ECM als SMS mit der MSISDN "341711234567" ab
- Die ECM wird vom Dienstesystem der Datenzentrale entgegengenommen
- Ein Datensatz mit der MSISDN "341711234567" wird in der Datenbank des Dienstesystems angelegt
- Das Callcenter des Landes III erhält einen Anruf vom Teilnehmer, die CLI wird als String "01711234567" von der lokalen Telekommunikationsanlage bzw. von dem lokalen Telefonnetzzugang übergeben
- Der führende Präfix "0" wird als National Prefix erkannt und zum Abgleich mit dem Datenbankeintrag mit Mobile Country Code "34" ersetzt, sodass als Synchronisierungskennung der String "341711234567" entsteht. Auf diese Weise kann die MSISDN aus der ECM in der Datenbank mit der CLI des Anrufes "gematched" werden
- Zum Aufbau eines Rückfrageanrufes zu einer Institution des selben Landes, für die in der Datenbank die Rufnummer "34987654321" hinterlegt ist, wird diese geprüft: Der Mobile Country Code "34" wird erkannt und durch Mcc Compensation "" (leer, "NULL") ersetzt. Es wird also der String "987654321" an die lokale Telekommunikationsanlage bzw. den lokalen Telefonnetzzugang übergeben (So Prefix ist nicht gefüllt)

### Szenario 3:

- Ein Teilnehmer befindet sich im Land V und setzt eine ECM als SMS mit der MSISDN "491711234567" ab
- Die ECM wird vom Dienstesystem der Datenzentrale entgegengenommen
- Ein Datensatz mit der MSISDN "491711234567" wird in der Datenbank des Dienstesystems angelegt
- Das Callcenter des Landes V erhält einen Anruf vom Teilnehmer, die CLI wird als String "22491711234567" von der lokalen Telekommunikationsanlage bzw. von dem lokalen Telefonnetzzugang übergeben
- Der führende Präfix "22" wird als International Prefix erkannt und zum Abgleich mit dem Datenbankeintrag abgeschnitten, sodass als Synchronisierungskennung der String "491711234567" entsteht. Auf diese Weise kann die MSISDN aus der ECM in der Datenbank mit der CLI des Anrufes "gematched" werden
- Zum Aufbau eines Rückfrageanrufes zu einer Institution eines anderen Landes, für die in der Datenbank die Rufnummer "33987654321" hinterlegt ist, wird diese geprüft: Der Mobile Country Code "99" wird nicht erkannt und so als ausgehender internationaler Anruf identifiziert. Es wird der Foreign Call Prefix "77" und der So Prefix "88" der Nummer vorangestellt, also der String "887733987654321" an die lokale Telekommunikationsanlage bzw. den lokalen Telefonnetzzugang übergeben

### Szenario 4:

- Im Callcenter des Landes I soll eine Rückfrage zur in der Datenbank hinterlegten Nummer "110" aufgebaut werden. Diese Nummer wird als ShortNumber "110" erkannt. Das So Prefix ist "" (leer, "NULL"), sodass die Nummer unmittelbar an die lokale Telekommunikationsanlage bzw. den lokalen Telefonnetzzugang übergeben wird

## Patentansprüche

1. Verfahren zur Abwicklung von Telematik-Notrufen, wobei mindestens eine in einem Callcentersystem (2a, 2b, 2c) eingehende Telefonverbindung mit einem in einem Dienstesystem (3) gespeicherten Datenpaket synchronisiert wird, und wobei zur Synchronisierung eine CLI der im Callcentersystem (2a, 2b, 2c) eingehenden Telefonverbindung erfasst wird, und aus dem im Dienstesystem (3) gespeicherten Datenpaket eine MSISDN erfasst wird,
**dadurch gekennzeichnet, dass**
die CLI der im Callcentersystem (2a, 2b, 2c) eingehenden Sprachverbindung in eine Synchronisierungskennung im MSISDN-Format überführt wird unter Ausführung der Schritte:
a. Prüfen, ob der Anfang der erfassten CLI mit einem im Callcentersystem (2a, 2b, 2c) gespeicherten International Prefix übereinstimmt, und zutreffendenfalls Löschen dieses Anfangs der CLI unter Bildung der Synchronisierungskennung,
b. Prüfen, ob der Anfang der erfassten CLI mit einem im Callcentersystem (2a, 2b, 2c) gespeicherten National Prefix übereinstimmt, und zutreffendenfalls Ersetzen dieses Anfangs der CLI durch einen im Callcentersystem (2a, 2b, 2c) gespeicherten Mobile Country Code unter Bildung der Synchronisierungskennung;
und ferner **dadurch**, dass die Synchronisierungskennung mit der MSISDN verglichen wird.

2. Verfahren nach Anspruch 1, **dadurch gekennzeichnet, dass** geprüft wird, ob die CLI leer ist, und zutreffendenfalls eine Synchronisierungskennung im MSISDN-Format synthetisch erzeugt wird.

3. Verfahren nach einem der Ansprüche 1 oder 2, **dadurch gekennzeichnet, dass** zum im Dienstesystem (3) gespeicherten Datenpaket eine vom Callcentersystem (2a, 2b, 2c) ausgehende Telefonverbindung aufgebaut wird unter Ausführung der Schritte:
a. Erfassen der im Datenpaket enthaltenen MSISDN;
b. Prüfen, ob der Anfang der MSISDN mit einem im Callcentersystem (2a, 2b, 2c) gespeicherten Mobile Country Code übereinstimmt, und im zutreffenden Falle Ersetzen dieses Anfangs durch eine im Callcenter gespeicherte Mcc Compensation unter Bildung eines Rufnummernstrings;
c.Voranstellen eines im Callcentersystem (2a, 2b, 2c) gespeicherten SoPrefix an den Rufnummernstring.

4. Verfahren nach einem der Ansprüche 1 bis 3, **dadurch gekennzeichnet, dass**, falls der Anfang der MSISDN mit dem Mobile Country Code nicht übereinstimmt, ein im Callcentersystem (2a, 2b, 2c) gespeicherter Foreign Call Prefix der MSISDN vorangestellt wird unter Bildung eines Rufnummernstrings.

5. Verfahren nach einem der Ansprüche 1 bis 4, **dadurch gekennzeichnet, dass** geprüft wird, ob die MSISDN einer im Callcentersystem (2a, 2b, 2c) gespeicherten Short Number entspricht und zutreffendenfalls die MSISDN als Rufnummernstring übernommen wird.

6. Vorrichtung zur Abwicklung von Telematik-Notrufen mit mindestens einem Callcentersystem (2a, 2b, 2c), welches eingerichtet ist zur Entgegennahme mindestens einer Telefonverbindung und zur Erfassung einer CLI der Telefonverbindung und welches ferner eine Schnittstelle (4) aufweist, die eingerichtet ist zur Entgegennahme einer MSISDN von einem Dienstesystem (3) und zur Übermittlung einer MSISDN an ein Dienstesystem (3),
**dadurch gekennzeichnet, dass**
das Callcentersystem:
a. einen Parameterspeicher aufweist, in dem als Parameter ein International Prefix und ein National Prefix enthalten ist;
b. programmtechnisch eingerichtet ist zur automatischen Vergleichung der im Parameterspeicher enthaltenen Parameterwerte mit einer Zahlenfolge und zur Entfernung oder Hinzufügung von Parameterwerten aus bzw. zur Zahlenfolge.

7. Vorrichtung nach Anspruch 6, **dadurch gekennzeichnet, dass** das mindestens eine Callcentersystem ferner programmtechnisch eingerichtet ist zur automatischen synthetischen Erzeugung einer Kennung im MSISDN-Format.

8. Vorrichtung nach einem der Ansprüche 6 oder 7, **dadurch gekennzeichnet, dass** das Callcentersystem Mittel zur Herstellung einer ausgehenden Telefonverbindung aufweist und im Speicher ferner als Parameter ein Mobile Country Code und eine MccCompensation enthalten ist.

9. Vorrichtung nach einem der Ansprüche 6 bis 8, **dadurch gekennzeichnet, dass** im Speicher ferner als Parameter ein Foreign Call Prefix enthalten ist.

10. Vorrichtung nach einem der Ansprüche 6 bis 9, **dadurch gekennzeichnet, dass** im Speicher ferner als Parameter ein SoPrefix enthalten ist.

11. Vorrichtung nach einem der Ansprüche 6 bis 10, **dadurch gekennzeichnet, dass** im Speicher als Parameter mindestens eine ShortNumber enthalten ist.

12. Vorrichtung nach einem der Ansprüche 6 bis 11, **dadurch gekennzeichnet, dass** das Callcentersystem (2a, 2b, 2c) über die Schnittstelle (4) mit einem Dienstesystem (3) verbunden ist und das Dienstesystem (3) programmtechnisch eingerichtet ist zur Entgegennahme einer SMS und zur Umwandlung dieser SMS in ein Notruf-Datenpaket und zur Speicherung dieses Datenpakets.

13. Software, **dadurch gekennzeichnet, dass** sie nach dem Laden in ein Computersystem ein Verfahren zur Abwicklung von Telematik-Notrufen nach einem oder mehreren der vorhergehenden Ansprüche durchführt.

14. Datenträger, **gekennzeichnet durch** eine Datenstruktur nach dem vorhergehenden Anspruch.
